# EUROPEAN PATENT APPLICATION

(11) **EP 2 679 924 A2**
(43) Date of publication of application: **01.01.2014**
(21) Application number: 12749901.0
(22) Date of filing: 23.02.2012
(51) Int. Cl.: F24F 7/08, F24F 7/10, F24F 11/02, F24F 13/28

(54) **VENTILATION APPARATUS CAPABLE OF RECOVERING THERMAL ENERGY**

(30) Priority: 23.02.2011 KR 20110015904
(71) Applicant: Lee, Dong Uk, Hongseong-gun, Chungnam 350-883 (KR)
(72) Inventor: Lee, Dong Uk, Hongseong-gun, Chungnam 350-883 (KR)
(74) Representative: Mittler, Enrico
(86) International application number: PCT/KR2012/001385
(87) International publication number: WO 2012/115463

(57) **Abstract**

Provided is a ventilation apparatus for a building to recover thermal energy. The ventilation apparatus includes a main body, an absorption filter, a heat exchanger, first and second blowing fans, and a water supply pipe. The main body has air exhaust ports for discharging indoor air out of the building and air supply ports for supplying outdoor air into the building. The absorption filter is disposed in the main body to cool exhaust air. The heat exchanger is disposed in the main body to exchange heat between supply air and exhaust air. The first and second blowing fans are disposed in the main body. The first blowing fan discharges indoor air and the second blowing fan supplies outdoor air. The water supply pipe supplies water to the absorption filter.

## Description

### CROSS-REFERENCE TO RELATED APPLICATIONS

This U.S. non-provisional patent application claims priority under 35 U.S.C. § 119 of Korean Patent Application No. 10-2011-0015904, filed on February 23, 2011, the entire contents of which are hereby incorporated by reference.

### BACKGROUND OF THE INVENTION

The present invention disclosed herein relates to a ventilation apparatus of recovering thermal energy, and more particularly, to a ventilation apparatus of recovering thermal energy without a loss in a process of ventilating indoor air.

Generally, various apparatuses such as boilers, air conditioners, and humidifiers are being widely used to maintain indoor air at a comfortable level of temperature and humidity. Thus, a large amount of energy is being consumed to maintain indoor air at a comfortable temperature regardless of season.

Accordingly, it is necessary to stop outdoor air from flowing into the indoor in order to minimize an energy loss when air conditioning is performed. In this case, when a user does not forcibly ventilate a building, indoor air inside the building stays for a long time.

When air stays in a closed space for a long time, various kinds of virus and fine dust that are harmful to the human body may be mixed with indoor air in large quantities. Also, the amount of carbon dioxide may rapidly increase instead of oxygen, hindering the metabolism of the human body.

Accordingly, even when an air conditioning apparatus operates, it is necessary to periodically remove contaminated indoor air and supply fresh outdoor air into the building in order to maintain a comfortable indoor environment. In this process of ventilating the building, thermal energy may be lost.

Furthermore, when outdoor air is introduced into a room, the air conditioning apparatus may reoperate due to a temperature difference the temperature of the introduced air and the setting temperature. As a result, since an energy loss can be caused by the ventilation of indoor air, the ventilation time of the building tends to be limited.

In order to minimize the energy loss due to the ventilation, exhaust heat recovering apparatuses are recently being developed and used to recover exhaust heat by exchanging heat between indoor air discharged out of the room and outdoor air supplied into the room.

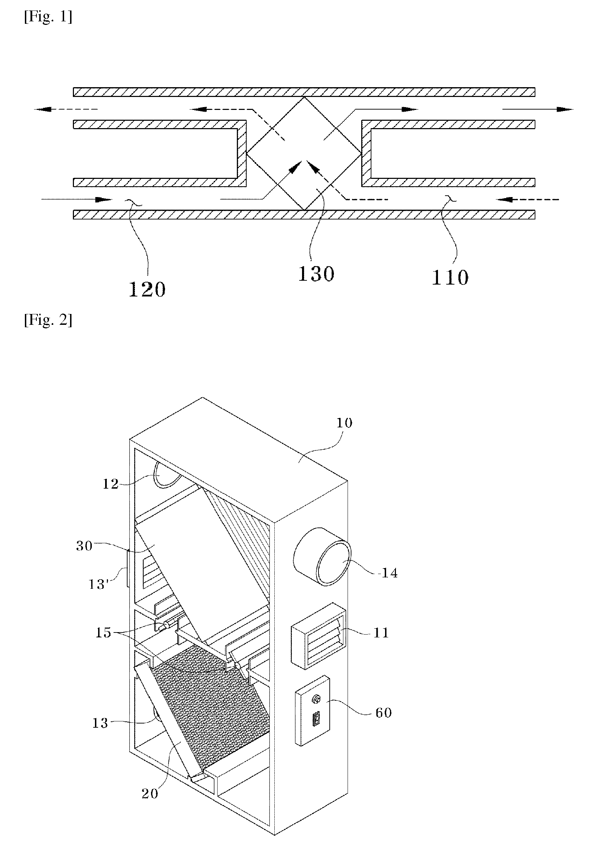

As an example of the exhaust heat recovering apparatuses, as shown in FIG. 1, air supply and exhaust ports 110 and 120 that allow air (hereinafter, referred to as "exhaust air") discharged out of the room and air (hereinafter, referred to as "supply air") supplied into the room to pass therethrough are provided, and an heat exchanger 130 is provided to allow supply air and exhaust air passing along the air supply and exhaust ports 110 and 120 to pass through different passages.

This technology uses only the heat exchanger 130 to heat exchange between supply air and exhaust air. In spite of the heat exchange between supply air and exhaust air, exhaust heat cannot be completely recovered. Accordingly, even though outdoor air to which exhaust heat is recovered is introduced into the room, a temperature difference occurs between the indoor temperature and the setting temperature, causing the reoperation of the air conditioning apparatus and thus the consumption of energy.

### SUMMARY OF THE INVENTION

The present invention provides a ventilation apparatus for recovering thermal energy, which can prevent energy consumption due to the reoperation of an air conditioning apparatus caused by a temperature difference between indoor air and outdoor air to which exhaust heat is recovered during the introduction of outdoor air into the room.

The present invention also provides a ventilation apparatus of recovering thermal energy, which can also be used as a humidifier by ventilating a room in winter season.

Embodiments of the present invention provide ventilation apparatuses for a building to recover thermal energy, including: a main body having air exhaust ports for discharging indoor air out of the building and air supply ports for supplying outdoor air into the building; an absorption filter disposed in the main body to cool exhaust air; a heat exchanger disposed in the main body to exchange heat between supply air and exhaust air; first and second blowing fans disposed in the main body, the first blowing fan discharging indoor air and the second blowing fan supplying outdoor air; and a water supply pipe for supplying water to the absorption filter.

In some embodiments, water supplied through the water supply pipe may be condensate water of an air conditioning apparatus.

### BRIEF DESCRIPTION OF THE DRAWINGS

The accompanying drawings are included to provide a further understanding of the present invention, and are incorporated in and constitute a part of this specification. The drawings illustrate exemplary embodiments of the present invention and, together with the description, serve to explain principles of the present invention. In the drawings:

FIG. 1 is a cross-sectional view illustrating a typical exhaust heat recovering apparatus;

FIG. 2 is a perspective view illustrating a ventilation apparatus of recovering thermal energy according to an embodiment of the present invention;

FIG. 3 is a cross-sectional view of FIG. 2;

FIG. 4 is an exploded perspective view illustrating a heat exchanger according to an embodiment of the present invention;

FIG. 5 is a view illustrating a configuration of a ventilation apparatus of recovering thermal energy according to an embodiment of the present invention;

FIG. 6 is a view illustrating an exemplary use of a ventilation apparatus of recovering thermal energy during the summer season according to an embodiment of the present invention;

FIG. 7 is a view illustrating an exemplary use of a ventilation apparatus of recovering thermal energy during the winter season according to an embodiment of the present invention; and

FIG. 8 is a view illustrating another exemplary use of a ventilation apparatus of recovering thermal energy according to an embodiment of the present invention.

Reference numerals set forth in the Drawings includes reference to the following elements as further discussed below:

| | | | |
|---|---|---|---|
| 1: | building | 1', 1": | air supply and exhaust pipes |
| 10: | main body | 11, 12: | air supply ports |
| 13, 14: | air exhaust ports | 13': | auxiliary air exhaust port |
| 15: | open/close door | 16: | heater core |
| 17: | water discharge pipe | 18: | temperature and humidity sensor |
| 20: | absorption filter | 30: | heat exchanger |
| 31: | first heat transfer plate | 32: | second heat transfer plate |
| 40: | blowing fan | 50: | water supply pipe |
| 51: | condensate water drain pipe | 60: | controller |
| 70: | branch pipe | 71: | branch door |
| C: | air conditioner | D: | control door |

### DETAILED DESCRIPTION OF PREFERRED EMBODIMENTS

Preferred embodiments of the present invention will be described below in more detail with reference to the accompanying drawings. The present invention may, however, be embodied in different forms and should not be constructed as limited to the embodiments set forth herein. Rather, these embodiments are provided so that this disclosure will be thorough and complete, and will fully convey the scope of the present invention to those skilled in the art.

Hereinafter, exemplary embodiments of the present invention will be described in detail with reference to the accompanying drawings.

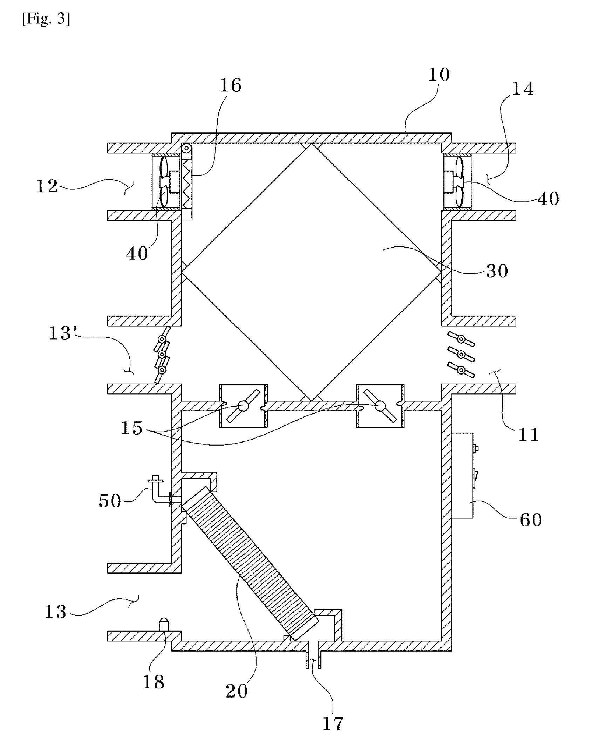

The present invention relates to a ventilation apparatus of recovering thermal energy to minimize a loss of thermal energy generated during the ventilation of indoor air when air conditioning is performed in buildings such as plants, apartments, and high-rise buildings. As shown in FIGS. 2 and 3, the ventilation apparatus may include a main body 10, an absorption filter 20, a heat exchanger 30, a pair of blowing fans 40, and a water supply pipe 50.

As shown in FIGS. 2 and 3, the main body 10 may have a space in which the absorption filter 20, the heat exchanger 30, the blowing fan 40, and the water supply pipe 50 described later are installed, air supply ports 11 and 12 for supplying outdoor air into a room, and air exhaust ports 13 and 14.

In this case, a plurality of doors may be disposed at the air supply port 11 through which outdoor air is introduced into the main body 10. The plurality of door may serve to control the open degree of the air supply port 11. The open degree of the doors may be automatically controlled by a controller 60.

Also, a water supply pipe 50 may be disposed at one side of the main body 10 to supply water to the absorption filter 20 disposed therein, and a water discharge pipe 17 may be disposed under the absorption filter 20 to discharge supplied water out of the main body 10.

In addition, an open/close door 15 may be provided to change the flow passage of exhaust air according to the summer season and winter season, and a temperature and humidity sensor 18 may be further provided to sense the temperature and the humidity of exhaust air supplied into the main body 10.

Meanwhile, a heater core 16 may be further provided to compensate for a deficient temperature upon the heat exchange between supply air and exhaust air by reheating supply air during the winter season. The heater core 16 may be implemented using an electric heater. The heater core 16 may be configured to rotate about one end, if necessary, between air passages to allow supply air passing therethrough to be heated.

The absorption filter 20 may be manufactured to have a sectional shape of lattice, wave or honeycomb, and may have an air passage communicating both sides thereof. When exhaust air passes along the air passage, exhaust air may be cooled by the absorption filter 20 soaked by water.

The absorption filter 20 is being widely used in a technology of generating cold wind using heat of evaporation as in an evaporation-typed cold air blower and an evaporation-typed humidifier. Since the absorption filter 20 can be easily selected or modified into various types by those skilled in the art, a detailed description thereof will be omitted herein.

Also, the absorption filter 20 may be disposed in plurality at the side surface of the main body 10, and exhaust air ports 13 may also be formed to communicate with the plurality of absorption filters 20, respectively.

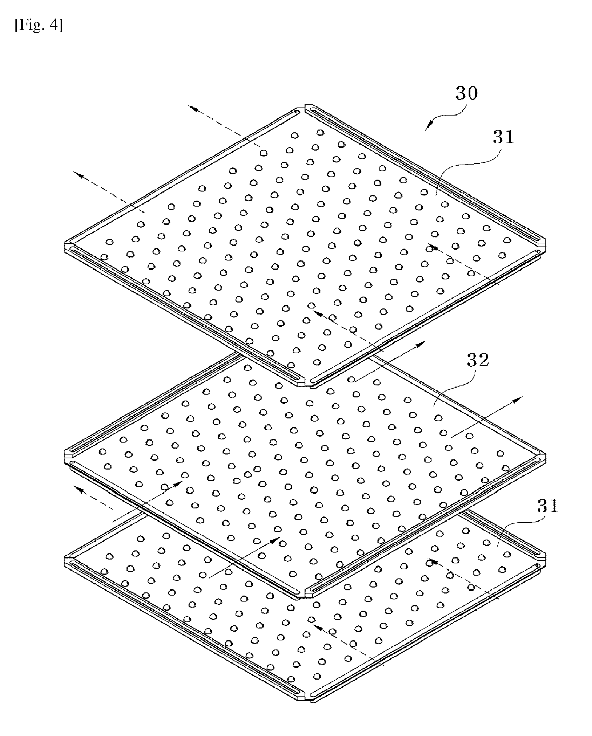

For the heat exchange between supply air and exhaust air, the heat exchanger 30 may be configured to be disposed inside the main body 10 to allow supply air and exhaust air to cross each other and flow into different layers. As shown in FIG. 4, a plate-type heat exchanger is being widely used as the heat exchanger 30. The plate-type heat exchanger may include first and second heat transfer plates 31 and 32 alternately stacked, and may indirectly exchange heat between supply air and exhaust air by allowing heat to be transferred to the first and second heat transfer plates 31 and 32 while supply air and exhaust air pass between the heat transfer plates.

The blowing fan 40, as shown in FIG. 3, may be disposed in the air supply port 12 and the air exhaust port 14 at the downstream side or the air supply port 11 and the air exhaust port 13 at the upstream side to transfer supply air and exhaust air to/from the main body 10, respectively.

The water supply pipe 50 may be disposed at the upper portion of the absorption filter 20 to supply water to the absorption filter 20. The water supply pipe 50 may be directly connected to a water pipe, or may be connected to a condensate water drain pipe 51 of an air conditioner.

Thus, when condensate water of the air conditioner is directly supply through the water supply pipe 50, the absorption filter 20 may be cooled to a lower temperature, allowing exhaust air passing the absorption filter 20 to be cooled to a lower temperature and thus improving the heat exchange performance.

The controller 60 may receive temperature and humidity data sensed by the temperature and humidity sensor 18 to control the amount of air supplied into the room. If necessary, the controller 60 may control the operation of the absorption filter 20 and the heater core 16 inside the main body 10 to switch functions such as heating mode, cooling mode, and humidifying mode.

Hereinafter, exemplary embodiments of the present invention will be described in more detail.

EXAMPLES

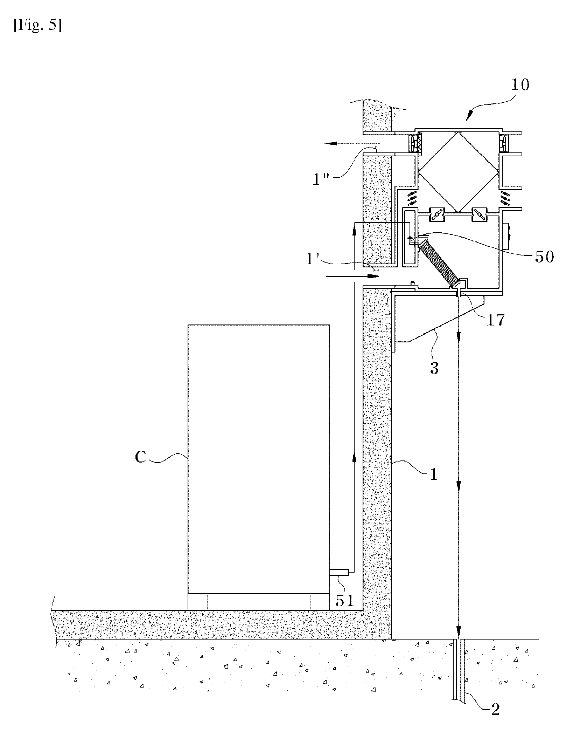

As shown in FIG. 5, the main body 10 may be installed so as to be connected to air supply and exhaust pipes 1' and 1" of a building 1. In this case, a separate support bracket 3 may also be installed according to the installation height of the main body 10. The main body 10 may also be installed inside the building to allow those skilled in the art to easily implement the present invention.

When the main body 10 is installed, the water discharge pipe 17 may be connected to a drain pipe 2, and the condensate water drain pipe 51 of the air conditioner C may be connected to the water supply pipe 50.

The ventilation apparatus of recovering thermal energy according to the embodiment of the present invention can operate in various manners, which will be described in detail below.

1. Ventilation Mode (Cooling)

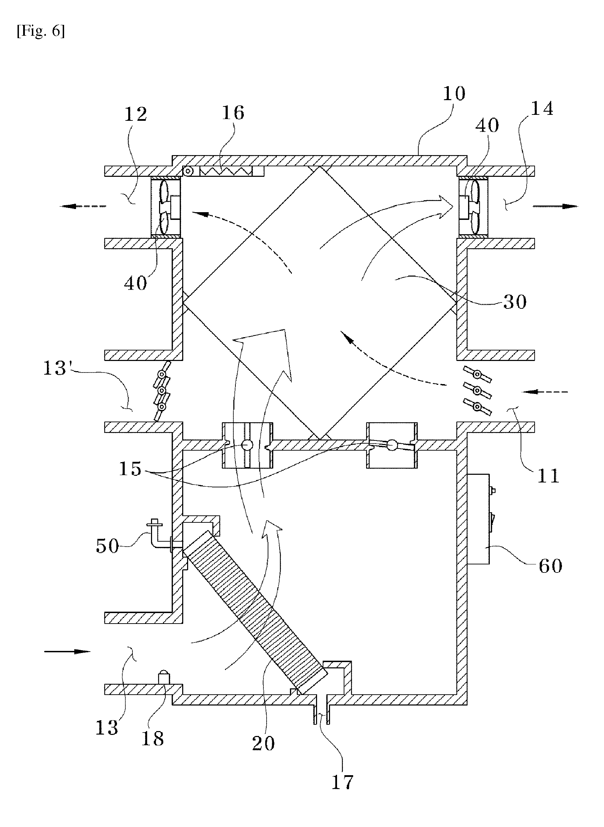

As shown in FIG. 6, when air cooling is performed during summer season, the ventilation apparatus may be controlled such that low-temperature cooled air is discharged out of the room through the air exhaust ports 13 and 14 and when outdoor air is supplied into the room along the air supply ports 11 and 12, low-temperature cooled air is discharged into the room.

In this case, exhaust air supplied into the main body 10 may be introduced through the air exhaust port 13, and then may pass through the absorption filter 20. The absorption filter 20 may be in a cooled state by water or condensate water. When exhaust air passes through the absorption filter 20, exhaust air may be evaporatively cooled to a lower temperature than the indoor cooling temperature due to the evaporation of water.

Evaporation-cooled exhaust air with a high humidity may be supplied to the heat exchanger 30 along a passage selected by the open/close door 15. In this case, as shown in the heat exchanger 30 of FIG. 4, exhaust air may pass through an interlayer selected from the first heat transfer plate 31 or the second heat transfer plate 32, and then may be discharged to the outside along the air exhaust port 14.

While indoor air is being discharged to the outside, outdoor air may be introduced into the main body 10 according to the amount of exhaust air discharged through the air supply port 11 and the air exhaust port 13, and may be supplied into the room through the air supply port 12 by passing through a different interlayer of the heat exchanger 30.

In this process, heat may be exchanged between supply air and exhaust air. Since the temperature of air supplied into the room is compensated due to the heat exchange by cooling exhaust air in consideration of the heat exchange performance, the indoor air conditioning apparatus need not reoperate during the ventilation. Accordingly, energy can be saved.

2. Ventilation Mode (Heating)

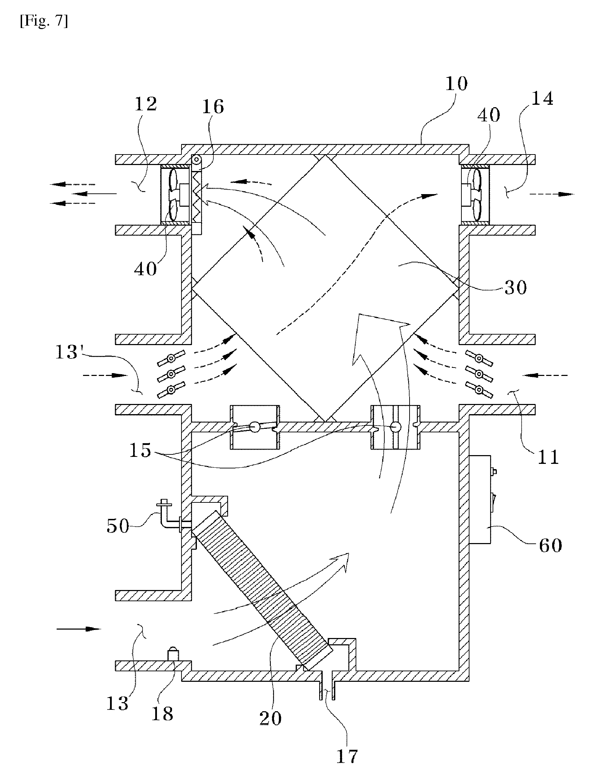

When indoor heating is performed during winter season, the ventilation apparatus may operate in ventilation mode while performing the same operation as the operation of summer season in a state where the operation of the absorption filter 20 is stopped. In this case, as shown in FIG. 7, an auxiliary air exhaust port 13' may be opened together with the air exhaust port 13 to allow indoor air to be introduced into the main body 10. Air introduced through the air exhaust port 13 may flow to the air supply port 12 at the indoor side through the heat exchanger 30, and air introduced through the auxiliary air exhaust port 13' may be discharged to the air exhaust port 14 at the other side through a different layer of the heat exchanger 30.

In this process, heat may be exchanged between indoor air at both sides.

In this case, an appropriate amount of outdoor air through the other air supply port 11 may be mixed with indoor air flowing to the air supply port 12 through the air exhaust port 13. The amount of outdoor air introduced through the air supply port 11 may be set similar to the amount of air discharged to the outside through the auxiliary air exhaust port 13'.

When the ventilation apparatus operates in such ventilation mode, the temperature of supply air that is heat-exchanged through the heat exchanger 30 may become lower than the indoor heating temperature. In this case, the heater core 16 installed at the air supply port 12 may also operate to compensate for deficient thermal energy.

In this case, consumption of electrical energy may occur in the heater core 16. However, since the operation time of the heater core 16 is relatively short compared to the ventilation time, the efficiency can be more improved than the air conditioning apparatus operates.

3. Humidifier Mode

The ventilation apparatus may also operate only in humidifier mode from a state where the ventilation apparatus operates in ventilation mode (heating). In this case, the auxiliary air exhaust port 13' and the air supply port 11 at the outdoor side may be interrupted.

Even in this case, the flow passage may be connected using the open/close door 15 such that air introduced to the air exhaust port 13 is directly connected to the air supply port 12. Also, the absorption filter 20 may operate to allow indoor air to pass through the absorption filter 20 and then be resupplied to the room.

In this case, the heater core 16 may operate to reheat air cooled when passing through the absorption filter 20. However, since the moisture of humidified air can be evaporated due to the operation of the heater core 16, it is desirable to operate the heater core 16 at a low temperature.

4. Cold Wind Mode (Cooling)

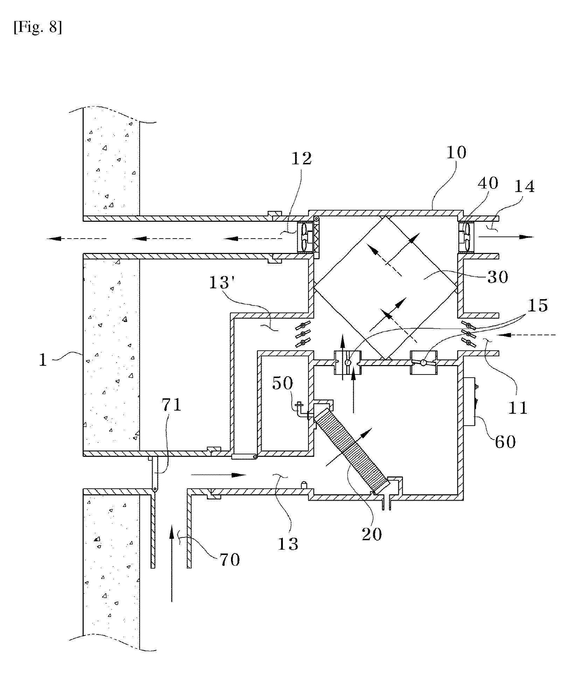

As another exemplary use of the ventilation apparatus shown in FIG. 8, a branch pipe 70 may be further installed at the air exhaust port 13, and a branch door 71 for selectively opening and closing the air exhaust port 13 and the branch pipe 70 may be further provided to supply cold wind into the room. Thus, since cold wind increases the amount of indoor air, the room may be naturally ventilated.

This method can be applied to a case where the temperature of indoor air is higher than that of outdoor air. In this case, outdoor air lower than indoor air may be supplied into the main body 10 to be cooled by the absorption filter 20, and may be supplied into the room at the air supply ports 11 and 12. Thus, evaporation-cooled air may be used only for heat exchange with air supplied into the room, and then may be redischarged out of the room.

Although it has been described in this embodiment that indoor/outdoor air are selectively used through the branch pipe 70, the air exhaust port 13 may also be disposed so as to suction only outdoor air without being connected to the air exhaust port at the indoor side, allowing the ventilation apparatus to operate only in cold wind mode (cooling).

As described above, the ventilation apparatus according to the embodiment of the present invention may recover exhaust heat by exchanging heat between exhaust air discharged to the outside and supply air supplied into the room, and may compensate for the temperature such that the temperature of supply air supplied into the room can get close to the setting temperature, reducing the rate of operation of the air conditioning apparatus and thus saving energy.

Since the present invention is used together with an indoor air conditioning apparatus, the installation is easy. During the summer time, since exhaust gas is cooled by condensate water discharged out of the air conditioner for heat exchange with supply air, the heat exchange performance can be improved, and thus the loss of thermal energy can be minimized.

Also, during the winter time, since temperature is compensated by exchanging heat between supply air and exhaust air upon ventilation of indoor air and reheating supply air using a heater core, indoor air can be maintained at an optimum temperature. Furthermore, since the ventilation apparatus can also be used as a humidifier, indoor air can be maintained in a comfortable state.

The above-disclosed subject matter is to be considered illustrative, and not restrictive, and the appended claims are intended to cover all such modifications, enhancements, and other embodiments, which fall within the true spirit and scope of the present invention. Thus, to the maximum extent allowed by law, the scope of the present invention is to be determined by the broadest permissible interpretation of the following claims and their equivalents, and shall not be restricted or limited by the foregoing detailed description.

## Claims

1. A ventilation apparatus for a building to recover thermal energy, comprising:
a main body having air exhaust ports for discharging indoor air out of the building and air supply ports for supplying outdoor air into the building;
an absorption filter disposed in the main body to cool exhaust air;
a heat exchanger disposed in the main body to exchange heat between supply air and exhaust air;
first and second blowing fans disposed in the main body, the first blowing fan discharging indoor air and the second blowing fan supplying outdoor air; and
a water supply pipe for supplying water to the absorption filter.

2. The ventilation apparatus of claim 1, further comprising an air conditioner for cooling indoor air and a condensate water drain pipe for discharging condensate water of the air conditioner, wherein the condensate water drain pipe is configured to be connected to the water supply pipe.

3. The ventilation apparatus of claim 1, further comprising an open/close door for switching a direction of exhaust air passing the heat exchanger and a water discharge pipe for discharging water passing the absorption filter to the outside.

4. The ventilation apparatus of claim 1, further comprising a heater core disposed in the main body to heat supply air.

5. The ventilation apparatus of claim 1, further comprising control doors disposed in the air supply ports and the air exhaust ports of the main body, respectively, a temperature and humidity sensor disposed in the main body, and a controller for automatically controlling an open degree of the control door according to a temperature and a humidity of air sensed by the temperature and humidity sensor.

6. The ventilation apparatus of claim 1, further comprising a branch door disposed at one of the air exhaust ports to stop indoor air from being supplied into the main body and a branch duct opened by the branch door to supply outdoor air to the air exhaust ports.
